# EUROPEAN PATENT APPLICATION

(11) **EP 3 859 471 A1**
(43) Date of publication of application: **04.08.2021**
(21) Application number: 21153234.6
(22) Date of filing: 25.01.2021
(51) Int. Cl.: G05B 19/418, B65H 26/06

(54) **METHOD FOR CONTINIOUSLY TRACING PACKAGING MATERIAL IN A FILLING MACHINE**

(30) Priority: 31.01.2020 EP 20154924
(71) Applicant: Tetra Laval Holdings & Finance S.A., 1009 Pully (CH)
(72) Inventor: MARTINEZ GARCIA, Ruben, 22227 Lund (SE)
(74) Representative: Tetra Pak - Patent Attorneys SE

(57) **Abstract**

A method for tracing packaging material in a package handling machine (1) is provided. The package handling machine (1) comprises at least one roller (11) for contacting the packaging material (2) and a controller (13) operatively connected to the roller (11). The method (100) comprises dividing the packaging material (2) into a plurality of fractions (21) and setting (101) a length of each fraction (21) of the packaging material (2), determining (102) a rotational angle of the roller (11) corresponding to movement of the packaging material (2) the length of one fraction (21), synchronizing (103) the current fraction (21) of the packaging material (2) being processed by the machine (1) with a current element (31) being processed by the controller (13), and storing (104) of data from the package handling machine (1) or from the packaging material (2) in the currently processed element (31).

## Description

### Technical Field

The invention relates to package handling and to package handling machines. More specifically, the invention relates to a method for tracing packaging material in a package handling machine, to a package handling machine using said method.

### Background Art

Packages made out of blanks of web material are becoming more and more common for storing/distributing of food products. Such packages provides several benefits, an important one being that they cause a relatively small environmental impact since they are often made out of environmentally friendly and recyclable materials. The web material, which is commonly made out of a carton-based material, is usually wound into large rolls, that are subsequently processed in various types of package handling machines such as filling machines etc to form the final shape of the package and to fill the package. During this process will the web material pass through several stations where the material is treated in different ways. It may for instance pass through numerous rollers, be subjected to heating, various chemicals, creasing and folding etc. depending on the application. During all these different handling stages or stations is the web material at risk of being damaged or otherwise compromised such that it would cause problems if it were to end up as a finished package. It is desirable to be able to track not only where on the web material that something went wrong, but also to be able to identify during which process step this actually happened. There are known methods of tracking events and relating these to an individual package in the web material. By relating events to individual packages can material waste be reduced and production time be saved, as only the material or blank of the affected individual package(s) needs to be discarded or possibly repaired. However, when handling vast amounts of material, this is not sufficient as even small quantities of wasted material amounts to large costs in the end. It is therefore desired to find a way to further improve the localization of web material affected by an event during handling of the material, to facilitate localization of which process step that malfunctioned, as well as to provide a package handling machine using said method.

### Summary

It is an object of the invention to at least partly overcome one or more of the above-identified limitations of the prior art. In particular, it is an object to provide a method for tracing packaging material that facilitates detection of a damaged portion of the packaging material. It is also an object to provide a package handling machine using the method.

To solve these objects is according to a first aspect a method for tracing packaging material in a package handling machine provided. The package handling machine comprises at least one roller for contacting the packaging material. The machine further comprises a controller operatively connected to the roller. The method comprises dividing the packaging material into a plurality of fractions and setting a length of each fraction of the packaging material, determining a rotational angle of the roller corresponding to movement of the packaging material the length of one fraction, synchronizing the current fraction of the packaging material being processed by the machine with a current element being processed by the controller, and storing of data from the package handling machine from the packaging material in the currently processed element.

The fractions divides the packaging material into small portions lengthwise and each fraction is represented by an element that is generated in an array, providing a high resolution data array that corresponds to the packaging material. Each element may store significant amounts of data, both from the packaging material itself as well as from the machine, providing a detailed logging of events and information regarding the material as it passes through the machine.

The synchronizing may further comprise assigning each element a package ID and/or a package fraction ID, facilitating that each element can be traced back to a specific part of an individual package.

The length of each fraction may be in the range of approximately 2 mm to 40 cm, preferably 3 to 8 mm.

The synchronizing may comprise detecting a marker on a predetermined fraction of the packaging material and determining positions of surrounding fractions based on the rotation of the roller. The marker provides an additional assurance and verification of what fraction that is currently being processed by the machine, and that the correct corresponding element is being processed by the controller.

In one embodiment is at least one marker arranged on the packaging material for each package, and each marker provides a package ID and/or a package fraction ID. With the marker providing information of the package ID and/or the package fraction ID is further verification provided of that the array and the packaging material are synchronized.

The method may further comprise subsequent controlling the array for data indicating if the packaging material is approved for further processing. If not, the machine will indicate the problem to the operator or alternatively automatically manage the problem at hand, for instance by discarding the fraction(s) of the packaging material that are damaged.

The synchronizing may further comprise receiving feedback from a position sensor for determining a rotational position of the roller.

The roller may be configured for translation of the packaging material. The roller is connected to an electric motor for rotation of the roller and the controller is connected to the electric motor. The synchronizing further comprises receiving feedback from a position sensor of the motor for determining a rotational position of the roller.

In a second aspect is a package handling machine provided for manufacturing packages out of packaging material. The package handling machine comprising at least one roller for contacting the packaging material. The machine further comprises a controller operatively connected to the roller and a data storage for reading/writing data associated with the package handling machine and/or the packaging material. The package handling machine being configured to perform the method according to the first aspect. The package handling machine is thus able to provide and make use of a high resolution data representing the packaging material, where defects of the packaging material may be located with a high precision and the faulty process step or station in the machine causing the defect can also rapidly be found.

The package handling machine may further comprise a position sensor configured for determining a rotational position of the roller.

In one embodiment, the roller is configured for translation of the packaging material, the roller is connected to an electric motor for rotation of the roller. The controller is connected to the electric motor, and the electric motor comprises a position sensor for determining a rotational position of the roller.

The electric motor may be a servomotor, and the position sensor may be a multi-turn encoder, providing high accuracy regulation of the rotational position of the roller.

Further still, a marker sensor may be provided for detecting a marker on the packaging material.

In one embodiment, the package handling machine is a filling machine.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is schematic diagram of a method for tracing packaging material,
Fig. 2a is a schematic outline of a package handling machine according to one embodiment,
Fig. 2b is a schematic outline of a package handling machine according to one embodiment, and
Fig. 3 is representation of an array according to one embodiment.

### Detailed description

The disclosed embodiments will now be described more fully hereinafter with reference to the accompanying drawings, in which certain embodiments of the invention are shown. Like numbers refer to like elements throughout.

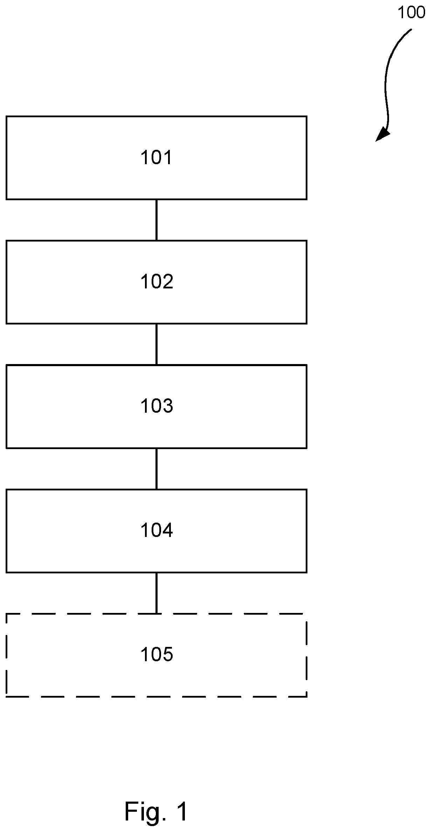

In the following will reference be made simultaneously to Figs 1 to 3, in which a schematic flowchart of a method 100 for tracing packaging material in a package handling machine 1, two embodiments of a package handling machine 1 and a virtual representation of data flow in a data storage 13 of the machine 1 are shown respectively. When producing packages out of packaging material, especially such that are meant to be containing food products, it is of utmost importance to maintain and monitor the integrity of the material for each package. For this purpose is it important that any fault or event that occurs anywhere in the manufacturing or handling of the packaging material is registered. The registering of such events should be easy to interpret and failsafe in its nature, to facilitate that every affected portion of the web material is found and such that it may be repaired or discarded. Naturally is it also important to be able to trace where in the manufacturing process that the event occurred that resulted in a damage to the packaging material, as it aids service personnel in their troubleshooting and subsequent repairing of the faulty machine.

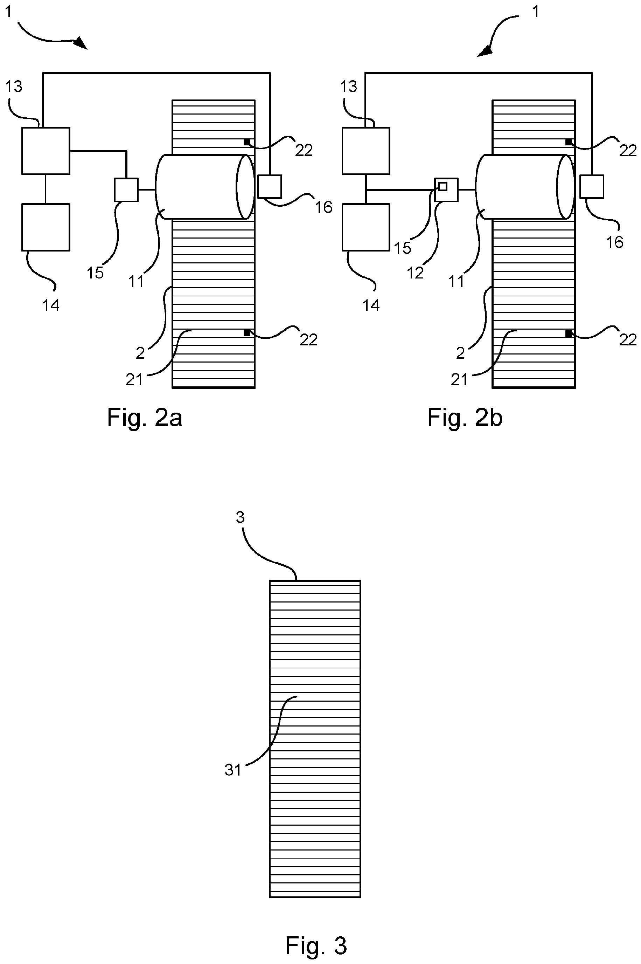

The method 100 comprises firstly setting a length of a fraction 21 of the packaging material 2. The packaging material 2 is lengthwise divided into fractions 21 with a certain length. Each fraction 21 is then, as it passes through the machine 1, given a virtual representation in the form of an element 31 in an array 3 generated by a controller 13 and stored in a data storage 14 of the machine 1. The array 3, which can be seen in Fig. 3, is to be considered as a virtual representation of the packaging material 2 being processed in the package handling machine (as seen in Fig. 2). It is to be understood that the shape shown in Fig. 2 of the array 3 is only for illustrative purposes, and the data representing the array 3 may be stored in any suitable form in a data storage 14 of the machine 1. The packaging material 2 is hereinafter referred to as a web material.

The array 3 as mentioned consists a plurality of elements 31 (also shown in Fig. 3), and these elements 31 each correspond to a predetermined length, a fraction 21, of the web material 2. The length of each fraction 21 of the web material 2 that each element 31 corresponds to may e.g. be set by an operator of the package handling machine 1 or be preset earlier during manufacturing of the machine 1, and depending on the application may vary from approximately 30-40 cm to approximately 3-8 mm. A preferred length may be approximately 5 mm. Other dimensions are of course also possible and are to be considered to fall within the scope of this disclosure. Each fraction 21 should however be at largest the same size as the length of web material 2 that is required for one package, and preferably significantly smaller than that. This is because the fraction size determines the resolution of the data that is stored in the array 3, where an increased resolution facilitates detection of the where the defect is located and reduces wasted material.

When the size of the each fraction 21 is known, this needs to be translated into a rotational angle of a roller 11 that equates to movement of the web material 2 the length of one fraction 21. This may be calculated as the diameter or radius of the roller 11 is known or can be measured by an operator. The roller 11 is configured to be in contact with the web material 2 and to rotate as the web material 2 translates or moves through the machine 1. A controller 13 of the machine that is connected to the roller 11, or to a position sensor 15 detecting rotation thereof, is therefore able to synchronize 103 the current fraction 21 of the web material 2 that is being processed by the machine 1 with the corresponding element 31 in the array 3 that is to be processed by the controller 13. The rotation of the roller 11 thus serves as the indicator for the controller 13 to determine which element 31 that is to be set as the current element 31. When the roller 11 has rotated a certain angle corresponding to the length of one fraction 21 will the element 31 be changed by the controller 13 accordingly. This is the primary means by which the array 3 is kept synchronized with the web material 2.

When the current fraction 21 of the web material 2 is synchronized with the current element 31 in the array 3 can data from the machine 1 or from the web material 2 be stored in the array 3 in a data storage 14.

In each element 31 of the array 3 may a large number of parameters be stored, such as machine malfunctions, if the web material 2 has been compromised, manufacturing information etc. The method 100 may also comprises a step of controlling 105 some or all of these parameters at certain points during the package handling process. The machine 1 may then alert the operator to take action based on the information in the array 3, or automatically correct the issue on its own for instance by discarding the affected fraction(s) 21.

For facilitating the interpretation of data may the synchronizing 103 of the element 31 with the corresponding fraction 21 further comprise assigning a package ID and/or a package fraction ID to each element 31. Such an ID may be arranged as a number e.g. 3.12, where the first digit(s) is the package ID, indicating that the element 31 corresponds to the third package (or blank thereof), and the two digits after the score point is the package fraction ID, indicating that it corresponds to the twelfth fraction 21 of that package. Preferably is the number of the package ID as well as of the package fraction ID defined such that it increases from the end of the web material 2 or the package travelling firstly through the machine 1 towards the other end.

To further facilitate the synchronization may the method comprise detecting a marker 22 on a predetermined fraction 21 of the web material 2 and determining positions of surrounding fractions 21 based on the rotation of the roller 11. The marker 22 may be a magnetic or an optical marker that is readable by a marker sensor 16 in the machine 1. Such markers 22 are known and often used in package handling applications and the actual type of marker is not of significant importance to the inventive concept herein and will thus not be explained further. However, by arranging a marker 22 in a specific fraction 21 of the web material 2, e.g. the first fraction 21 in each package, can the machine 1 verify that a new package has been reached, and can thus set the current element 31 in the array 3 accordingly. This may be performed by the controller 13 simply counting the number of markers 22 that passes.

However, the marker 22 may also comprise the information of the current package ID and the package fraction ID, and which is detectable by the sensor 16 of the machine 1 such that it can be stored in the corresponding element 31 by the controller 13.

The markers 22 are also beneficial as this method may be performed simultaneously and continuously at several stations throughout the machine 1, whereby data is stored in the array 3 at several different elements 31 simultaneously or in rapid succession. The markers 22 will in that context serve to ensure that each station stores data in the correct element 31 corresponding to the current fraction 21 passing through that station. The marker 22 may further comprise information of a changed fraction 21 length, which is detected by the machine 1 and is then applied by the controller 13 until a new fraction length setting is received. As is to be understood, this may be set individually for each station in the machine 1 the web material 2 passes through.

It is to be understood that the steps of the method 100 may be iterated at different rates depending on the application. However, the synchronization 103 and storing 104 of data are iterated continuously as the web material 2 moves through the machine 1. When the roller 11 has rotated an angle corresponding to the length of one fraction 21 will it not only trigger the setting of a new element 31 but before that it may also trigger the storing 104 of data from the machine 1 or the web material 2 in the current element 31. This may as mentioned be performed continuously and at several stations throughout the machine 1 simultaneously.

Specifically focusing on the embodiment of the machine 1 shown in Fig. 2a, the roller 11 is seen being arranged in contact with the web material 2 and rolling with it the material 2 passes through the machine 1. The roller 11 is a passive roller, that is connected to a position sensor 15 such as a multi-turn encoder. However other types of rotary position sensors are also feasible and are to be considered to fall within the scope of this disclosure. The position sensor 15 is further connected to the controller 13 and to the data storage 14. The controller 13 is a processing unit capable of reading, writing and processing computer readable code, while the data storage 14 being any suitable type of read/write memory for storing computer readable data, code or logic etc. The controller 13 and the data storage 14 may be a part of a programmable logic controller (PLC) for controlling the machine 1. The machine 1 is only shown with one station, but as mentioned above may the machine 1 comprise several stations that are all connected to the controller 13 and to the data storage 14 such that the array 3 can be processed simultaneously in all the stations of the machine 1.

In Fig. 2b is another embodiment of the machine 1 shown. Emphasis below is on the features that differs from the embodiment described above in relation to Fig. 2a, as several features are shared. In Fig. 2b, the roller 11 is a driving roller 11 that provides translational force to the web material 2. It is thus connected to an electrical motor 12, the electrical motor preferably being a servo motor having a position sensor 15. The position sensor 15 is preferably a multi-turn encoder, but as mentioned earlier may also other types of rotary position sensors be used. The motor 12 and the sensor 15 are connected to the controller 13 and to the data storage 14, where the controller 13 may not only sense the rotational position of the roller 11 but also control the rotation thereof. Once again, only one station is shown and the machine 1 may comprise several stations all providing information/data to the array 3 simultaneously.

The package handling machine 1 is preferably a filling machine but other types of machine for handling and manufacturing packages out of web material are also considered.

From the description above follows that, although various embodiments of the invention have been described and shown, the invention is not restricted thereto, but may also be embodied in other ways within the scope of the subject-matter defined in the following claims.

## Claims

1. A method for tracing packaging material (2) in a package handling machine (1), wherein the package handling machine (1) comprises at least one roller (11) for contacting the packaging material (2), and a controller (13) operatively connected to the roller (11), wherein the method (100) comprises:
- dividing the packaging material (2) into a plurality of fractions (21) and setting (101) a length of each fraction (21),
- determining (102) a rotational angle of the roller (11) that corresponds to a movement of the packaging material (2) of the length of one fraction (21),
- synchronizing (103) the current fraction (21) of the packaging material (2) being processed by the machine (1) with a current element (31) being processed by the controller (13), and
- storing (104) data from the package handling machine (1) or from the packaging material (2) in the currently processed element (31).

2. Method according to claim 1, wherein synchronizing (103) further comprises assigning each element (31) a package ID and/or a package fraction ID.

3. Method for tracing packaging material according to claim 1 or 2, wherein the length of each fraction (21) is in the range of approximately 2 mm to 40 cm, preferably 3 to 8 mm.

4. Method for tracing packaging material according to any one of the preceding claims, wherein the synchronizing (103) comprises detecting a marker (22) on a predetermined fraction (21) of the packaging material (2) and determining positions of surrounding fractions (21) based on the rotation of the roller (11).

5. Method for tracing packaging material according to claim 4 when dependent on claim 2, wherein at least one marker (22) is arranged on the packaging material (2) for each package, and wherein each marker (22) provides a package ID and/or a package fraction ID.

6. Method for tracing packaging material according to any one of the preceding claims, wherein the current element (31) is arranged in an array (3) and wherein the step of storing (104) is performed by storing data from the package handling machine (1) or from the packaging material (2) in the currently processed element (31) in a data storage.

7. Method for tracing packaging material according to claim 6 when dependent on claim 5, further comprises subsequent controlling (105) the array (3) for data indicating if the packaging material (2) is approved for further processing.

8. Method for tracing packaging material according to any one of the preceding claims, wherein synchronizing (103) comprises receiving feedback from a position sensor (15) for determining a rotational position of the roller (11).

9. Method for tracing packaging material according to any one of the preceding claims, wherein the roller (11) is configured for translation of the packaging material (2), the roller (11) being connected to an electric motor (12) for rotation of the roller (11), and wherein the controller (13) is connected to the electric motor (12), and wherein synchronizing (103) comprises receiving feedback from a position sensor (15) of said motor (12) for determining a rotational position of the roller (11).

10. A package handling machine for manufacturing packages out of packaging material (2), said package handling machine (1) comprising at least one roller (11) for contacting the packaging material (2), a controller (13) operatively connected to the roller (11) and a data storage (14) for reading and/or writing data associated with the package handling machine (1) and/or the packaging material (2), wherein said package handling machine (1) being configured to perform the method according to any of claims 1 to 9.

11. Package handling machine according to claim 9, further comprising a position sensor (15) configured for determining a rotational position of the roller (11).

12. Package handling machine according to claim 10 or 11, wherein the roller (11) is configured for translation of the packaging material (2), the roller (11) being connected to an electric motor (12) for rotation of the roller (11), and wherein the controller (13) is connected to the electric motor (12), said electric motor (12) comprising a position sensor (15) for determining a rotational position of the roller (11).

13. Package handling machine according to claim 11, wherein the electric motor (12) is a servomotor (12), and wherein the position sensor (15) is a multi-turn encoder (15).

14. Package handling machine according to any one of claims 9 to 12, further comprising a marker sensor (16) for detecting a marker (22) on the packaging material (2).

15. Package handling machine according to any one of claims 9 to 12, wherein the package handling machine (1) is a filling machine (1).
